(19) Europäisches Patentamt
European Patent Office
Office européen des brevets

(11) **EP 1 992 538 B1**

(12) **EUROPÄISCHE PATENTSCHRIFT**

(45) Veröffentlichungstag und Bekanntmachung des Hinweises auf die Patenterteilung:
**15.05.2013 Patentblatt 2013/20**

(51) Int Cl.:
**B60W 30/08** (2012.01)   B60R 21/00 (2006.01)

(21) Anmeldenummer: **08102904.3**

(22) Anmeldetag: **26.03.2008**

(54) **Vorausschauende Sicherheitsvorrichtung für Kraftfahrzeuge**

Anticipatory safety device for motor vehicles

Dispositif de sécurité prévisionnel pour véhicules automobiles

(84) Benannte Vertragsstaaten:
**DE ES FR GB IT**

(30) Priorität: **14.05.2007 DE 102007022589**

(43) Veröffentlichungstag der Anmeldung:
**19.11.2008 Patentblatt 2008/47**

(73) Patentinhaber: **ROBERT BOSCH GMBH**
**70442 Stuttgart (DE)**

(72) Erfinder:
• **Becker, Jan-Carsten**
**Palo Alto, CA 94304 (US)**

• **Staempfle, Martin**
**71701, Schwieberdingen (DE)**
• **Wilhelm, Ulf**
**71277, Rutesheim (DE)**
• **Oechsle, Fred**
**71642, Ludwigsburg (DE)**
• **Grimm, Andreas**
**75233, Tiefenbronn-Muehlhausen (DE)**

(56) Entgegenhaltungen:
**WO-A-2006/074210     DE-A1- 10 231 557**
**DE-A1- 10 336 986**

**Beschreibung**

Stand der Technik

Die Erfindung betrifft eine vorausschauende Sicherheitsvorrichtung für Kraftfahrzeuge, mit einer Vorfeldsensorik zur Ortung von Objekten im Vorfeld des Fahrzeugs und einem Steuergerät, das die Signale der Vorfeldsensorik auswertet, um die Gefahr einer bevorstehenden Kollision zu bewerten, und das bei akuter Kollisionsgefahr in die Längsführung des Fahrzeugs eingreift, um die Kollision abzuwenden oder deren Folgen zu mildem, wobei eine ergänzende Sensorik zur Ortung von Objekten im sonstigen Umfeld des Fahrzeugs vorgesehen ist und daß das Steuergerät dazu eingerichtet ist, anhand der Daten der ergänzenden Sensorik eine Längsführungsstrategie zu berechnen, die die Gesamtgefahr unter Berücksichtigung von Objekten im sonstigen Umfeld minimiert.

Vorrichtungen dieser Art werden auch als PSS-Systeme (Predictive Safety System) bezeichnet. Beispiele solcher PSS-Systems sind in DE 42 18 484 A1 und DE 102 31 557 A beschrieben. Die Vorfeldsensorik wird üblicherweise durch einen winkelauflösenden Radarsensor gebildet, mit dem die Abstände, Relativgeschwindigkeiten und Azimutwinkel der georteten Objekte, insbesondere von vorausfahrenden Fahrzeugen, gemessen werden können. Wenn mit der Sensorik beispielsweise eine plötzlich einsetzende starke Verzögerung des unmittelbar vorausfahrenden Fahrzeugs festgestellt wird, so berechnet das Steuergerät, ob die Gefahr einer Kollision mit dem vorausfahrenden Fahrzeug besteht. Ein maßgeblicher Parameter ist dabei die sogenannte "time to collision" (ttc), d.h., die Zeit, die noch bis zur Kollision vergehen würde, falls sich der dynamische Zustand der beteiligten Fahrzeuge nicht ändert. Wenn die ttc einen bestimmten Schwellenwert von beispielsweise 1-2 s unterschreitet, so wird ein Warnsignal an den Fahrer ausgegeben, beispielsweise ein akustisches Warnsignal, und/oder es wird automatisch eine Notbremsung ausgelöst. Ein anderer Parameter, anhand dessen sich die Kollisionsgefahr bewerten läßt, ist die Verzögerung (negative Beschleunigung), des Fahrzeugs, die erforderlich wäre, um die Kollision noch abzuwenden. Wenn diese Verzögerung das maximale Verzögerungsvermögen des Fahrzeugs erreicht oder überschreitet, das typischerweise in der Größenordnung von 10 m/s2 liegt, so besteht akute Kollisionsgefahr und es wird eine entsprechende Aktion ausgelöst.

Aufgrund des Winkelauflösungsvermögens des Radarsensors ist das System auch in der Lage festzustellen, ob die Kollision durch ein Ausweichmanöver abgewendet werden könnte. In diesem Fall sollte nur ein Warnhinweis an den Fahrer ausgegeben werden.

Bei den heute in der Praxis eingesetzten PSS-Systemen besteht die Aktion, die bei akuter Kollisionsgefahr ausgelöst wird, generell nur in der Ausgabe eines Warnhinweises an den Fahrer, und es bleibt dann dem Fahrer überlassen, die Situation selbst einzuschätzen und ggf. geeignete Maßnahmen zur Abwendung der Kollision zu ergreifen. Der Grund ist, daß eine vollautomatische Auslösung einer Notbremsung durch das PSS-System sehr hohe Anforderungen an die Sensorik und an die Auswertealgorithmik stellt und daß Fehlauslösungen ihrerseits eine erhebliche Gefahrenquelle darstellen und insbesondere leicht zu einem Auffahrunfall mit einem nachfolgenden Fahrzeug führen können.

Die bisher gebräuchlichen PSS-Systeme reagieren generell nur auf bewegliche Objekte, also insbesondere auf vorausfahrende Fahrzeuge, während stehende Objekte, die sich daran erkennen lassen, daß ihre Relativgeschwindigkeit dem Betrag nach mit der Eigengeschwindigkeit des Fahrzeugs übereinstimmt, bisher ignoriert werden. Es sind jedoch Systeme in Entwicklung, die auch auf stehende Objekte reagieren und somit einen deutlich höheren Nutzen mit sich bringen. Bei solchen Systemen stellt sich allerdings das Problem der Fehlauslösungen in besonderer Schärfe, weil es für stehende Objekte oft schwer zu entscheiden ist, ob es sich um reale Hindernisse oder nur um Scheinhindernisse handelt, beispielsweise Radar-Reflexe von Kanaldeckeln oder kleineren Gegenständen (z.B. Blechdosen auf der Fahrbahn) oder Objekte, die sich in Wahrheit hinter einer Kurve am Fahrbahnrand befinden.

Generell besteht bei PSS-Systemen, die aktiv in die Längsführung des Fahrzeugs eingreifen, unabhängig davon, ob diese Systeme nur auf bewegliche Objekte oder auch auf stehende Objekte reagieren, ein Zielkonflikt zwischen einer möglichst frühzeitigen Auslösung des Eingriffs, damit die Kollision möglichst noch abgewendet werden kann, und andererseits der Vermeidung von Fehlwarnungen. Dieser Konflikt kann bei den bisher bekannten Vorschlägen nur dadurch gelöst werden, daß hinsichtlich der Wahl der Auslöseschwelle ein geeigneter Mittelwerg gewählt wird.

PSS-Systeme sind häufig mit Komfortsystemen kombiniert, beispielsweise mit einem Abstandsregelsystem, das automatisch den Abstand zu einem unmittelbar in der eigenen Spur vorausfahrenden Fahrzeug regelt. In diesem Zusammenhang ist es auch bekannt, das Fahrzeug mit einer ergänzenden Sensorik auszurüsten, mit der nicht nur das Vorfeld des Fahrzeugs, sondern auch das sonstige Umfeld überwacht werden kann, also der Rückraum sowie ggf. der Verkehr auf Nebenspuren. Diese ergänzende Sensorik wird bisher beispielsweise für Spurwechsel- oder Überholassistenten eingesetzt, die den Fahrer warnen, wenn ein Spurwechsel oder ein Überholvorgang wegen des Verkehrs auf den Nebenspuren oder des Nachfolgeverkehrs nicht möglich ist.

DE 199 33 782 A1 beschreibt ein Sicherheitssystem, das nicht zur Vermeidung einer Kollision mit Objekten im Vorfeld des Fahrzeugs dient, sondern vielmehr zur Vermeidung eines Auffahrunfalls mit einem nachfolgenden Fahrzeug. Dazu wird mit Hilfe eines Rückraumradars der Abstand und die Relativgeschwindigkeit des nachfolgenden Fahrzeugs gemessen, und wenn der Fahrer des eigenen Fahrzeugs ein Bremsmanöver einleitet, beispielsweise beim Auffahren auf ein Stauende, wird, sofern ein Auffahren des nachfolgenden Fahrzeugs droht, automatisch die Warnblinkanlage eingeschaltet, damit der Fahrer des nachfolgenden Fahrzeugs rechtzeitig gewarnt wird. Als Weiterbildung dieses Systems wird in der genannten Druckschrift vorgeschlagen, daß das System automatisch in die Längsführung des Fahrzeugs eingreift, um das Fahrzeug zu beschleunigen oder die Verzögerung zu reduzieren, damit der Auffahrunfall vermieden wird. Diese Funktion soll allerdings durch den Fahrer übersteuerbar sein, damit der Fahrer der Abwendung einer Kollision mit einem Objekt im Vorfeld des Fahrzeugs die höhere Priorität geben kann.

WO 2006/074210 beschreibt eine vorausschauende Sicherheitsvorrichtung, die bei der Auslösung von Airbags auch auf eine drohende Kollision von hinten reagiert.

Eine Vorrichtung nach dem Oberbegriff des Anspruchs 1 ist aus DE 103 36 986 A bekannt.

Offenbarung der Erfindung

Aufgabe der Erfindung ist es, ein vorausschauendes Sicherheitssystem der eingangs genannten Art zu schaffen, mit dem sich die Fahrsicherheit weiter erhöhen läßt.

Diese Aufgabe wird erfindungsgemäß dadurch gelöst, daß daß die ergänzende Sensorik ein Rückraumradar umfaßt und daß das Steuergerät dazu eingerichtet ist, die Bewegung eines im Rückraum georteten Fahrzeugs mathematisch zu modellieren, unter Zugrundelegung von empirisch ermittelten Durchschnittswerten für die Reaktionszeit des Fahrers des nachfolgenden Fahrzeugs und das Verzögerungsvermögen dieses Fahrzeugs.

Diese Vorrichtung hat den Vorteil, daß sowohl die von Objekten im Vorfeld des Fahrzeugs als auch die vom rückwärtigen Verkehr ausgehende Gefahr bei der Kollisionsvermeidungsstrategie berücksichtigt werden kann, so daß sich die Gesamtgefahr minimieren läßt.

Insbesondere leistet die Erfindung einen wichtigen Beitrag zur Auflösung des Zielkonflikts zwischen möglichst frühzeitiger Auslösung und Vermeidung von Fehlauslösungen. Da nämlich das erfindungsgemäße System auch die vom rückwärtigen Verkehr ausgehende Gefahr berücksichtigt, läßt sich das von Fehlauslösungen ausgehende Gefährdungspotential deutlich reduzieren, so daß die Auslöseschwelle in Sinne einer früheren Auslösung angepaßt werden kann und somit der Nutzen des Sicherheitssystems maximiert wird.

Die ergänzende Sensorik sollte zu diesem Zweck zumindest den Rückraum des Fahrzeugs überwachen. Alternativ oder zusätzlich kann jedoch auch eine Überwachung der Nebenspuren vorgesehen sein. In dem Fall kann mit Hilfe der ergänzenden Sensorik beispielsweise auch festgestellt werden, ob der Verkehr auf den Nebenspuren und der nachfolgende Verkehr ein Ausweichmanöver zulassen, und wenn dies der Fall ist, kann die Auslöseschwelle für den aktiven Eingriff in die Längsführung im Sinne einer späteren Auslösung verändert werden. Gleichzeitig kann jedoch schon zu einem früheren Zeitpunkt ein Warnhinweis an den Fahrer ausgegeben werden, um den Fahrer zu dem Ausweichmanöver zu veranlassen.

Vorteilhafte Ausgestaltungen und Weiterbildungen der Erfindung sind in den Unteransprüchen angegeben.

In einer vorteilhaften Ausführungsform ist das System so ausgelegt, daß es eine Verzögerungsstrategie berechnet, bei der die Verzögerung des eigenen Fahrzeugs gerade so groß ist, daß ein Aufprall des nachfolgenden Fahrzeugs gerade eben noch vermieden wird.

Der Vorteil dieser Ausführungsform besteht vor allem darin, daß selbst im Fall einer Fehlwarnung ein Auffahrunfall mit dem nachfolgenden Fahrzeug in der Regel vermieden werden kann, so daß eine deutlich frühere Auslöseschwelle gewählt werden kann.

Dabei wird ggf. in Kauf genommen, daß es zu einer Kollision mit dem vorausfahrenden Fahrzeug oder, allgemeiner, mit dem im Vorfeld georteten Hindernis kommt. Aufgrund des relativ frühen Auslösezeitpunkts werden die Folgen dieser Kollision jedoch stark abgemildert sein, in der Regel sogar stärker als bei herkömmlichen Systemen, die zwar auf eine Vermeidung der Kollision mit dem vorderen Objekt abzielen, jedoch wegen der Gefahr von Fehlwarnungen erst zu einem späteren Zeitpunkt in die Längsführung eingreifen können.

Die Berechnung der Verzögerungsstrategie kann auf einem geeigneten Modell für die Weg/Zeit-Kurve des eigenen Fahrzeugs basieren. Ein vergleichsweise einfaches Modell, das mit vertretbarem Rechenaufwand und in entsprechend kurzer Zeit zu einem Ergebnis führt, besteht beispielsweise darin, daß die Weg/Zeit-Kurve in drei Abschnitte unterteilt wird: einen ersten linearen Abschnitt, dessen Dauer der Systemreaktionszeit des eigenen Fahrzeugs entspricht und für den unterstellt wird, daß das eigene Fahrzeug noch mit der momentanen Eigengeschwindigkeit weiterfährt, einen zweiten Abschnitt, in dem eine konstante Verzögerung des eigenen Fahrzeugs unterstellt wird, also eine Kurve in der Form eines Parabelstücks, die die Verzögerung des Fahrzeugs bis zum Stillstand beschreibt, und schließlich einen Abschnitt, der den Stillstand des eigenen Fahrzeugs repräsentiert.

Auf entsprechende Weise läßt sich auch die Weg/Zeit-Kurve des nachfolgenden Fahrzeugs modellieren, unter der Annahme einer durchschnittlichen Reaktionszeit (hier einschließlich der Reaktionszeit eines menschlichen Fahrers) und unter der Annahme eines durchschnittlichen Verzögerungsvermögens des nachfolgenden Fahrzeugs für den parabelförmigen Abschnitt.

Anhand dieser Modelle läßt sich dann die optimale Verzögerung des eigenen Fahrzeugs berechnen, bei der sich die Weg/Zeit-Kurven des eigenen Fahrzeugs und des nachfolgenden Fahrzeugs gerade eben berühren (ggf. mit einer geeigneten Sicherheitsmarge), die Kurve des nachfolgenden Fahrzeugs aber an keiner Stelle über die Kurve des eigenen Fahrzeugs hinausgeht (was einem Auffahrunfall mit dem nachfolgenden Fahrzeug entsprechen würde).

Natürlich sind auch komplexere Modelle für die Bewegung des eigenen Fahrzeugs und des nachfolgenden Fahrzeugs denkbar.

Da beispielsweise während einer Kolonnenfahrt die dynamischen Daten des nachfolgenden Fahrzeugs mit Hilfe des Rückraumradars fortlaufend überwacht werden können, lassen sich die Berechnungen für die Bestimmung der optimalen Verzögerungsstrategie gleichsam vorbeugend ständig aktualisieren, so daß die optimale Strategie unmittelbar zur Verfügung steht und angewandt werden kann, sobald sich die akute Gefahr einer Kollision mit einem Objekt im Vorfeld abzeichnet.

Es sind auch verschiedene Modifikationen der hier beschriebenen Strategie denkbar. Beispielsweise kann in der Phase, in der die zuvor berechnete optimale Verzögerungsstrategie angewandt wird, die Gefahr der Kollision mit dem Objekt im Vorfeld fortlaufend neu bewertet werden, und falls sich der Verdacht einer Kollision mit dem vorderen Objekt nicht bestätigt, kann die Verzögerungsstrategie abgebrochen werden. Wenn sich dagegen der Verdacht bestätigt und sich mit hinreichender Sicherheit feststellen läßt, daß es sich bei dem im Vorfeld georteten Objekt um ein echtes Hindernis handelt, kann von der ursprünglichen Strategie, die auf eine Vermeidung eines Auffahrunfalls mit dem nachfolgenden Fahrzeug abzielt, auf maximale Verzögerung umgeschaltet werden, so daß dann die Vermeidung der Kollision mit dem Vorderfahrzeug höhere Priorität erhält. Das ist vor allem deshalb vorteilhaft, weil beispielsweise nach dem in Deutschland geltenden Recht in den meisten Fällen der Fahrer des auffahrenden Fahrzeugs als der Verursacher des Unfalls gilt und für die Unfallfolgen zu haften hat.

Ebenso ist es möglich, daß das Steuergerät auf die oben beschriebene Weise auch die Weg/Zeit-Kurve des vorausfahrenden Fahrzeugs oder des voraus liegenden Hindernisses modelliert und die voraussichtliche relative Aufprallgeschwindigkeit des eigenen Fahrzeugs auf das Hindernis berechnet. Wenn diese Aufprallgeschwindigkeit oberhalb eines bestimmten Schwellenwertes liegt, bei dem eine ernste Gefährdung der Insassen des eigenen Fahrzeugs zu befürchten ist, kann dann von der zunächst vorgesehenen Verzögerungsstrategie auf maximale Verzögerung umgeschaltet werden, um die dann im allgemeinen gravierenderen Folgen des Aufpralls auf das vordere Objekt weitestmöglich zu mildern.

Wenn die ergänzende Sensorik auch die Nebenspuren überwacht, kann gemäß einer Weiterbildung der Erfindung bei der Berechnung der optimalen Verzögerungsstrategie auch der Verkehr auf den Nebenspuren berücksichtigt werden. Beispielsweise kann es bei einer Massenkollision vorkommen, daß ein Fahrzeug, das sich etwa auf gleicher Höhe mit dem eigenen Fahrzeug befindet, außer Kontrolle gerät und droht, mit hoher Relativgeschwindigkeit von der Seite her auf das eigene Fahrzeug aufzuprallen, wobei wegen der fehlenden Knautschzone die Verletzungsgefahr für die Insassen des eigenen Fahrzeugs besonders hoch ist. In dem Fall kann die Längsführungsstrategie so modifiziert werden, daß das Ausweichen vor dem sich von der Seite her nähernden Fahrzeug Priorität gegenüber der Abwendung einer Kollision mit einem vorausfahrenden Fahrzeug erhält. Unter Umständen kann dies anstelle einer Verzögerung des eigenen Fahrzeugs auch eine Beschleunigung implizieren.

Die erfindungsgemäße Vorrichtung kann auch dann aktiv werden, wenn keine Kollision mit einem vorderen Objekt droht, sondern lediglich ein Aufprall eines nachfolgenden Fahrzeugs, beispielsweise dann, wenn das eigene Fahrzeug das Ende eines Staus bildet. Auch in dem Fall kann eine Beschleunigung des eigenen Fahrzeugs oder, bei Fahrzeugen mit einer sogenannten Stop & Go Funktion ggf. auch ein automatisches Anfahren aus dem Stand angezeigt sein.

Weiterhin läßt sich das erfindungsgemäße System auch in den Fällen nutzen, in denen das eigene Fahrzeug (ggf. durch den Fahrer selbst) noch rechtzeitig vor dem Hindernis zum Stehen gebracht wurde, sich aber ein bevorstehender Aufprall des nachfolgenden Fahrzeugs deutlich abzeichnet. In dem Fall kann durch automatische Aktivierung der Bremsen des eigenen Fahrzeugs mit maximaler Bremskraft die Gefahr verringert werden, daß das eigene Fahrzeug durch den Aufprall des nachfolgenden Fahrzeugs auf das Vorderfahrzeug aufgeschoben wird.

Kurze Beschreibung der Zeichnungen

Ein Ausführungsbeispiel der Erfindung ist in den Zeichnungen dargestellt und in der nachfolgenden Beschreibung näher erläutert.
Es zeigen:

Figur 1        ein Blockdiagramm einer erfindungsgemäßen Sicherheitsvorrichtung;
Figur 2        eine Skizze einer Verkehrssituation zur Erläuterung der Arbeitsweise der Vorrichtung nach Fig. 1; und
Figuren 3 bis 6    Weg/Zeit-Diagramme zur Erläuterung der Arbeitsweise der Vorrichtung.

Ausführungsformen der Erfindung

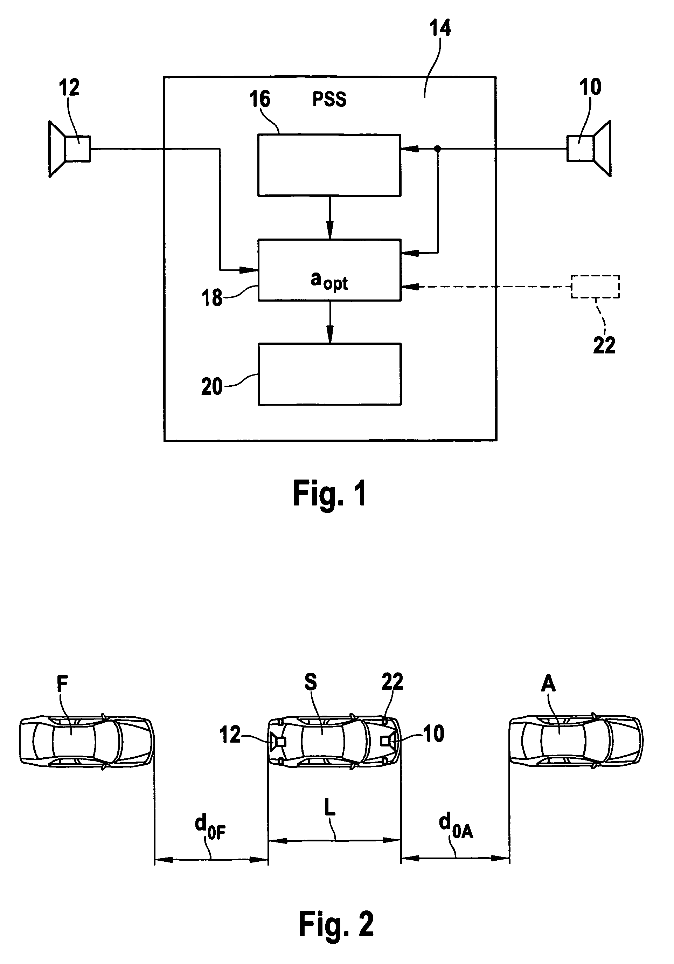

Die in Fig. 1 gezeigte vorausschauende Sicherheitsvorrichtung umfasst eine Vorfeldsensorik 10, die in diesem Beispiel durch einen vorn im Fahrzeug eingebauten Radarsensor gebildet wird, eine ergänzende Sensorik, in diesem Beispiel ein Rückraumradar 12, und ein elektronisches Steuergerät 14. Das Steuergerät 14 wird im Regelfall ein elektronisches Datenverarbeitungssystem mit geeigneter Software für die Ausführung der Sicherheitsfunktionen der Vorrichtung sein.

Die wesentlichen Funktionsmodule des Steuergerätes 14 sind ein Kollisionswarnmodul 16, ein Strategiemodul 18 und ein Eingriffsmodul 20. Das Kollisionswarnmodul 16 wertet die Daten der Vorfeldsensorik 10 aus und entscheidet anhand dieser Daten, ob eine Kollision mit einem im Vorfeld georteten (stehenden oder fahrenden) Hindernis bevorsteht. Wenn die Kollisionswahrscheinlichkeit einen bestimmten Wert überschreitet, kann über eine nicht gezeigte Mensch/Maschine-Schnittstelle ein Warnhinweis, beispielsweise ein akustischer Warnhinweis, an den Fahrer ausgegeben werden.

Gleichzeitig oder bei Überschreitung eines höheren zweiten Schwellenwertes wird ein Auslösesignal über das Strategiemodul 18 an das Eingriffsmodul 20 ausgegeben, um einen Eingriff in die Längsführung des Fahrzeugs, insbesondere einen Bremseingriff auszulösen. Das Eingriffsmodul 20, das nicht notwendigerweise in das Steuergerät integriert sein muß, sondern beispielsweise auch Teil eines gesonderten Bremsensteuergerätes ein kann, moduliert daraufhin den Bremsdruck an den Radbremsen des Fahrzeugs in der Weise, daß eine von dem Strategiemodul 18 berechnete (negative) Beschleunigung $a_{opt}$ eingehalten wird.

Das Strategiemodul 18 wertet die Daten des Rückraumradars 12 aus und berechnet anhand dieser Daten sowie anhand der Daten der Vorfeldsensorik 10 die Beschleunigung $a_{opt}$, die der optimalen Längsführungsstrategie entspricht, wie im folgenden näher erläutert werden soll.

Wahlweise kann die ergänzende Sensorik zusätzlich zu dem Rückraumradar 12 auch seitlich am Fahrzeug angeordnete Sensoren, beispielsweise Ultraschallsensoren oder Nahbereichs-Radarsensoren 22 umfassen, mit denen Objekte geortet werden können, die sich etwa auf gleicher Höhe links und rechts neben dem eigenen Fahrzeug befinden. In dem Fall wertet das Strategiemodul 18 auch die Daten dieser seitlichen Sensoren aus und berücksichtigt sie bei der Berechnung der optimalen Längsführungsstrategie.

In Fig. 2 ist schematisch eine typische Kolonnenfahrtsituation dargestellt. Das mit der Sicherheitsvorrichtung gemäß Fig. 1 ausgerüstete Fahrzeug, im folgenden das "eigene Fahrzeug" ist mit S bezeichnet. Vor diesem Fahrzeug befindet sich ein vorausfahrendes Fahrzeug A und hinter ihm ein nachfolgendes Fahrzeug F. Die Vorfeldsensorik 10 misst den aktuellen Abstand $d_{0A}$ und die Relativgeschwindigkeit des vorausfahrenden Fahrzeugs A, und das Rückraumradar 12 misst den Abstand $d_{0F}$ und die Relativgeschwindigkeit des nachfolgenden Fahrzeugs F. Die Länge des eigenen Fahrzeugs S ist mit L bezeichnet.

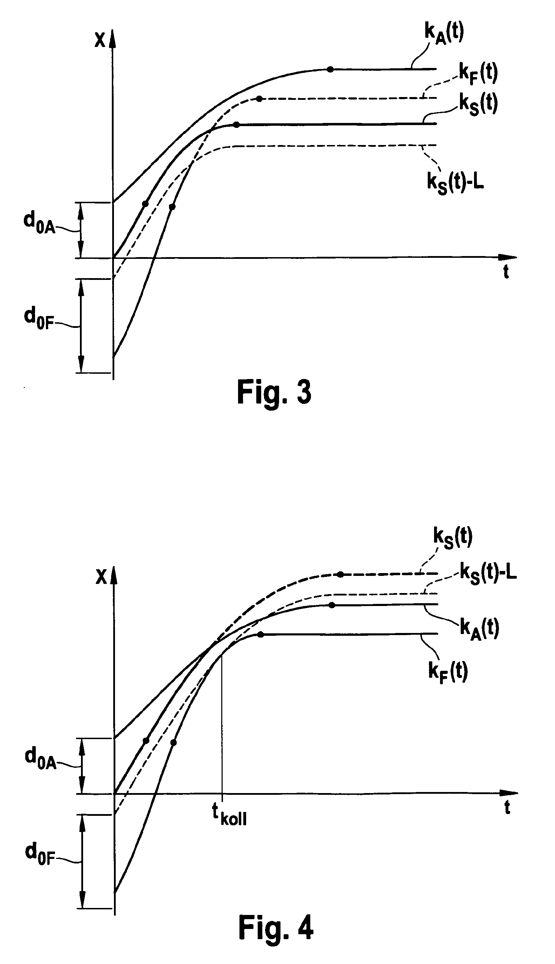

Wenn die Vorfeldsensorik feststellt, daß das vorausfahrende Fahrzeug A plötzlich stark verzögert, so gibt das Kollisionswarnmodul 16 das Auslösesignal aus. Mögliche Verzögerungsstrategien, die daraufhin vom Strategiemodul 18 angewandt werden, sind in Figuren 4 bis 6 in der Form von Weg/Zeit-Diagrammen für die drei Fahrzeuge S, A und F dargestellt.

Fig. 3 illustriert zunächst die Verzögerungsstrategie, die in einem herkömmlichen Sicherheitssystem angewandt wird, also ohne Berücksichtigung der Dynamik des nachfolgenden Fahrzeugs F. Die Kurve $k_A(t)$ ist die Weg/Zeit-Kurve des vorausfahrenden Fahrzeugs A, und entsprechend repräsentieren die Kurven ks(t) und $k_F(t)$ die Bewegungen des eigenen Fahrzeugs S und des nachfolgenden Fahrzeugs F. Die Kurve ks(t)-L ist die Weg/Zeit-Kurve für das Heck des eigenen Fahrzeugs S. Diese Kurve ist folglich gegenüber der die Vorderfront des eigenen Fahrzeugs repräsentierenden Kurve $k_S(t)$ um die Länge L verschoben.

Zum Zeitpunkt t = 0 gibt das Kollisionswarnmodul 16 das Auslösesignal aus. Zu diesem Zeitpunkt hat das vorausfahrende Fahrzeug A den Abstand $d_{0A}$ und das nachfolgende Fahrzeug F hat den Abstand $d_{0F}$. Die durch die Kurven in Fig. 3 repräsentierten Orte X der drei Fahrzeuge sind auf den Ort der Vorderfront des eigenen Fahrzeugs S zum Zeitpunkt t = 0 bezogen.

Die in Fig. 3 gezeigten Weg/Zeit-Kurven werden durch das Steuergerät 14 jeweils in der Weise modelliert, daß sie aus zwei oder drei Abschnitten zusammengesetzt sind, nämlich einem linearen Abschnitt entsprechend konstanter Geschwindigkeit, einem parabelförmigen Abschnitt entsprechend konstanter Verzögerung und einem horizontalen Abschnitt entsprechend dem Stillstand des betreffenden Fahrzeugs. Die Grenzen zwischen diesen verschiedenen Abschnitten sind mit Fig. 3 jeweils durch schwarze Punkte auf den betreffenden Kurven markiert.

Da für das vorausfahrende Fahrzeug A zum Zeitpunkt t = 0 bereits die Verzögerung eingesetzt hat, besteht die Kurve $k_A(t)$ nur aus dem parabelförmigen Abschnitt und dem horizontalen Abschnitt. Die durch das Eingriffsmodul 20 aufgelöste Verzögerung des eigenen Fahrzeugs S setzt erst etwas später ein, da für das Eingriffsmodul 20 und das nachgeschaltete Bremssystem eine gewisse Reaktionszeit veranschlagt werden muß, in der Praxis beispielsweise 0,4 s betragen kann. Folglich liegt bei der Kurve ks(t) vor dem parabelförmigen Abschnitt ein linearer Abschnitt, dessen Steigung der momentanen Geschwindigkeit des eigenen Fahrzeugs S entspricht.

Gemäß der in Fig. 3 dargestellten herkömmlichen Verzögerungsstrategie wird für das eigene Fahrzeug eine Notbremsung ausgelöst, d.h., unmittelbar nach Ablauf der Systemreaktionszeit wird das Fahrzeug mit maximaler Verzögerung gebremst, beispielsweise mit einer Verzögerung von 10 m/s². Im gezeigten Beispiel reicht dies aus, die Kollision mit dem vorausfahrenden Fahrzeug A abzuwenden.

Die relativ starke Verzögerung des eigenen Fahrzeugs S kann jedoch dazu führen, daß das nachfolgende Fahrzeug F auf das eigene Fahrzeug auffährt. Auch der Fahrer des nachfolgenden Fahrzeugs F kann frühestens zum Zeitpunkt t = 0 auf die starke Verzögerung des Fahrzeugs A reagieren. Die typische Reaktionszeit eines menschlichen Fahrers (einschließlich der Systemreaktionszeit der Bremsanlage) liegt empirischen Untersuchungen zufolge etwa zwischen 0,8 s und 1.6 s. Für die Modellierung des Fahrzeugs F kann daher je nach Systemauslegung der Mittelwert von 1,2 s oder auch der optimistischste Wert von 0,8 s zugrunde gelegt werden.

Dementsprechend weist die Kurve $k_F(t)$ in Fig. 3 einen linearen Abschnitt von - im gezeigten Beispiel - 0,8 s auf. Auf diesen Abschnitt folgt ein parabelförmiger Abschnitt, der der durchschnittlichen Verzögerung eines von einem menschlichen Fahrer gebremsten Fahrzeugs (Vollbremsung) entspricht. Diese Verzögerung beträgt typischerweise 7 m/s². Man erkennt in Fig. 3, daß die Kurve für das nachfolgende Fahrzeug F die Kurve ks(t)-L für das Heck des eigenen Fahrzeugs schneidet, was bedeutet, daß das nachfolgende Fahrzeug auf das eigene Fahrzeug auffährt. Von diesem Zeitpunkt an ist die Kurve für das nachfolgende Fahrzeug gestrichelt dargestellt.

Fig. 4 illustriert für die gleiche Situation, wie das Strategiemodul 18 eine Verzögerungsstrategie berechnet, die bei minimaler Gesamtgefährdung den Aufprall des nachfolgenden Fahrzeugs vermeidet. Das eigene Fahrzeug wird hier mit einer konstanten Verzögerungsrate (negative Beschleunigung $a_{opt}$) verzögert, die so gewählt ist, daß die Kurve $k_F(t)$ für das nachfolgende Fahrzeug die Kurve ks(t)-L für das Heck des eigenen Fahrzeugs S nur in einem Punkt tangiert, diese aber nicht schneidet.

Das würde bedeuten, daß sich die Stoßstangen der beiden Fahrzeuge einmal kurzzeitig berühren, es aber nicht zu einem ernsten Aufprall kommt. Natürlich läßt sich die Berührung der Stoßstange durch Zugabe einer kleinen Sicherheitsmarge vermeiden. Da jedoch die Reaktionszeit des Fahrers des nachfolgenden Fahrzeugs und das Verzögerungsvermögen dieses Fahrzeugs ohnehin nur geschätzt werden können, läßt sich ein leichter Kontakt der beiden Fahrzeuge ohnehin nicht sicher ausschließen. Die gewählte Verzögerungsstrategie sorgt jedoch dafür, daß es allenfalls zu geringfügigen Blechschäden aber nicht zu ernsteren Schäden und insbesondere nicht zu Personenschäden kommt.

Die (negative) Beschleunigung $a_{opt}$ läßt sich im Strategiemodul 18 auf der Grundlage der gewählten Modellierung der Fahrzeugbewegungen eindeutig berechnen. Sie ist eine Funktion der folgenden Größen: des Ortes $X_S$ des eigenen Fahrzeugs (zum Zeitpunkt der Berechnung), der Geschwindigkeit $V_S$ des eigenen Fahrzeugs, der Systemreaktionszeit $\Delta t_S$ des eigenen Fahrzeugs, des Ortes $X_F$ des nachfolgenden Fahrzeugs F, der Geschwindigkeit $V_F$ des nachfolgenden Fahrzeugs (Absolutgeschwindigkeit, die jedoch aus der vom Radarsensor gemessenen Relativgeschwindigkeit berechnet werden kann), der (angenommenen) Verzögerung $a_F$ des nachfolgenden Fahrzeugs und der (angenommenen) Reaktionszeit $\Delta t_F$ des Fahrers des nachfolgenden Fahrzeugs.

$$a_{opt} = a_{opt}(X_S, V_S, \Delta t_S, X_F, V_F, a_F, \Delta t_F).$$

Die Herleitung der Funktionsvorschrift ist mathematische Routine und soll hier nur grob skizziert werden. Aus den bekannten Geschwindigkeiten und Reaktionszeiten für das eigene Fahrzeug und das nachfolgende Fahrzeug und der angenommenen (negativen) Beschleunigung des nachfolgenden Fahrzeugs und der zu berechnenden Beschleunigung $a_{opt}$ des eigenen Fahrzeugs lassen sich die Funktionsgleichungen für die Parabelstücke der Kurven $k_F(t)$ und ks(t) aufstellen. Für den Zeitpunkt $t_{koll}$, an dem sich die Stoßstangen der beiden Fahrzeuge S und F kurz berühren, gilt:

$$X_S(t) - L = X_F(t) \qquad\qquad (1)$$

sofern $X_S$ den Ort der vorderen Stoßstange des eigenen Fahrzeugs angibt.

Außerdem folgt aus der Bedingung, daß sich die Kurven bei $t_{koll}$ tangieren:

$$dX_S(t_{koll})/dt = dX_F(t_{koll})/dt \qquad\qquad (2)$$

Man erhält so ein quadratisches Gleichungssystem mit den beiden Unbekannten $a_{opt}$ und $t_{koll}$. Durch Auflösung dieses Gleichungssystems erhält man somit u.a. die gesuchte Größe $a_{opt}$.

Es ist zu bemerken, daß die gesuchte Verzögerungsstrategie nur von den dynamischen Daten des eigenen Fahrzeugs und des nachfolgenden Fahrzeugs aber nicht von denen des vorausfahrenden Fahrzeugs abhängig ist. Eine Kollision mit dem vorausfahrenden Fahrzeug A kann somit bei dieser Strategie nicht sicher ausgeschlossen werden. In der Tat kommt es in dem in Fig. 4 gezeigten Beispiel zu einem Aufprall des eigenen Fahrzeugs auf das vorausfahrende Fahrzeug A. Für die Zeit nach diesem Aufprall ist die Kurve $k_S(t)$ gestrichelt dargestellt.

Die Verzögerungsstrategie ist jedoch so gewählt, daß die Beschleunigung $a_{opt}$ die kleinstmögliche Beschleunigung (stärkste Verzögerung) ist, bei der ein Auffahren des nachfolgenden Fahrzeugs noch vermieden werden kann. Folglich wird die Heftigkeit des Aufpralls des eigenen Fahrzeugs auf das vorausfahrende Fahrzeug A auf ein Minimum reduziert. So wird durch die vorgeschlagene Strategie die Gesamtgefährdung minimiert. Natürlich ist im Rahmen der Erfindung alternativ auch eine Optimierungsstrategie denkbar, bei der die Beschleunigung $a_{opt}$ so berechnet wird, daß das eigene Fahrzeug das vorausfahrende Fahrzeug nur an einem Punkt leicht berührt (oder diese Berührung gerade eben vermieden wird) und dabei ggf. ein Aufprall des nachfolgenden Fahrzeugs in Kauf genommen wird. In dem Fall ist $a_{opt}$ die kleinstmögliche Beschleunigung, die eine Kollision mit dem vorausfahrenden Fahrzeug vermeidet, und somit die Beschleunigung, bei der die Heftigkeit des Aufpralls des nachfolgenden Fahrzeugs minimiert wird.

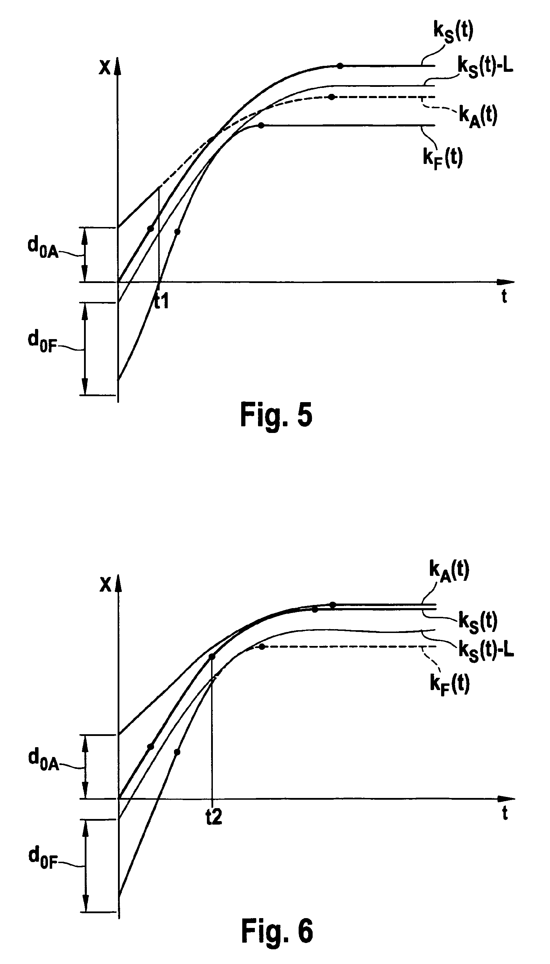

Der besondere Vorteil der in Fig. 4 gezeigten Strategie erweist sich, wenn man den Fall betrachtet, daß es sich bei dem vom Kollisionswarnmodul 16 ausgegebenen Auslösesignal um eine Fehlauslösung handelt, d.h., daß das vorausfahrende Fahrzeug A in Wahrheit nicht so stark verzögert (Messfehler aufgrund von Rauschen oder Streusignalen bei der Messung der Relativgeschwindigkeit des Fahrzeugs A) oder daß es sich bei dem vermeintlichen Fahrzeug A in Wahrheit um ein Scheinobjekt handelt, das nur durch eine Fehlinterpretation der Ortungssignale des Radarsensors vorgetäuscht wird. Dieser Fall ist in Fig. 5 dadurch symbolisiert, daß die Kurve $k_A(t)$ für das vorausfahrende Fahrzeug ab einem bestimmten Zeitpunkt t1 gestrichelt dargestellt ist. Auch wenn die vom Strategiemodul 18 bestimmte Verzögerungsstrategie fortgesetzt wird, kommt es nicht zu einer ernsten Kollision mit dem nachfolgenden Fahrzeug F. Wenn zum Zeitpunkt t1 oder später erkannt wird, daß in Wahrheit keine Kollisionsgefahr mit dem vorausfahrenden Fahrzeug A besteht, kann natürlich die Notbremsung abgebrochen werden, so daß ein Auffahren des nachfolgenden Fahrzeugs erst recht vermieden wird.

Somit erlaubt es diese Strategie, das Kollisionswarnmodul 16 so zu konfigurieren, daß es auf eine mögliche Kollisionsgefahr relativ empfindlich reagiert und schon zu einem relativ frühen Zeitpunkt das Auslösesignal ausgibt. Dadurch erhöht sich die Chance, daß die Kollision mit dem vorausfahrenden Fahrzeug abgewendet werden kann.

Fig. 6 illustriert ein weiteres Beispiel für eine mögliche Verzögerungsstrategie gemäß der Erfindung. Hier wird angenommen, daß im Kollisionswarnmodul 16 zwei Auslöseschwellen vorgesehen sind, eine relativ empfindliche Schwelle für eine frühzeitige Auslösung und eine Schwelle, die das Auslösesignal nur dann bestätigt, wenn aufgrund fortlaufender Messungen fast sicher festgestellt werden kann, daß es sich bei dem vorausfahrenden Fahrzeug A um ein echtes Hindernis handelt und tatsächlich eine Kollision zu befürchten ist. In Fig. 6 ist angenommen, daß dieses Bestätigungssignal zum Zeitpunkt t2 ausgegeben wird. Dadurch wird das Strategiemodul 18 angewiesen, die Verzögerungsstrategie zu ändern und von der zuvor berechneten Beschleunigung $a_{opt}$ auf maximale Verzögerung, beispielsweise -10 m/s$^2$ umzuschalten. Die Kurve $k_S(t)$ in Fig. 6 weist demgemäß zwei Parabelstücke auf, die die beiden unterschiedlichen Beschleunigungen repräsentieren und die bei t2 differenzierbar an einander anschließen. Durch die stärkere Verzögerung des eigenen Fahrzeugs auf dem zweiten Parabelstück kann dann ggf., wie in Fig. 6 gezeigt ist, die Kollision mit dem vorausfahrenden Fahrzeug noch abgewendet werden, doch wird dafür nun eine (leichte) Kollision mit dem nachfolgenden Fahrzeug F in Kauf genommen.

Wenn das nachfolgende Fahrzeug F einen großen Abstand und/oder eine kleine Relativgeschwindigkeit hat, so daß ein Auffahren des nachfolgenden Fahrzeugs ohnehin nicht zu befürchten ist, wird die nach der oben skizzierten Funktionsvorschrift berechnete Beschleunigung $a_{opt}$ unter dem tatsächlichen Verzögerungsvermögen von -10 m/s$^2$ des eigenen Fahrzeugs liegen. Natürlich wird in dem Fall $a_{opt}$ im Strategiemodul 18 durch die maximale Verzögerung ersetzt. Das bedeutet, daß die erfindungsgemäße Vorrichtung automatisch eine Vollbremsung auslöst, wenn kein Auffahrunfall mit dem nachfolgenden Fahrzeug zu befürchten ist.

Da die Berechnung der Beschleunigung $a_{opt}$ nicht von den dynamischen Daten des vorausfahrenden Fahrzeugs A abhängig ist, kann die Berechnung auch schon dann vorgenommen werden, wenn das vorausfahrende Fahrzeug noch weit entfernt oder gar nicht vorhanden ist. Das Strategiemodul 18 kann die optimale Beschleunigung "vorbeugend" berechnen, sobald ein nachfolgendes Fahrzeug geortet wird, und kann die Berechnung dann zyklisch aktualisieren. Wenn dann ein Auslösesignal vom Kollisionswarnmodul 16 eintrifft, braucht nur auf die berechnete Beschleunigung umgeschaltet zu werden, ohne daß die nötigen Berechnungen zu einer Verlängerung der Systemsreaktionszeit führen. Ebenso kann die Berechnung von $a_{opt}$ auch nach Eintreffen des Auslösesignals fortgesetzt werden, so daß die optimale Verzögerungsstrategie stets an die aktuellen dynamischen Daten des nachfolgenden Fahrzeugs F angepasst werden kann. Dabei können dann die zunächst nur geschätzten Werte für die Reaktionszeit des Fahrers des nachfolgenden Fahrzeugs und für das Verzögerungsvermögen des nachfolgenden Fahrzeugs durch die tatsächlich gemessenen Werte ersetzt werden, so daß sie Genauigkeit der Strategie zur Gefahrenminimierung weiter verbessert wird.

**Patentansprüche**

1. Vorausschauende Sicherheitsvorrichtung für Kraftfahrzeuge (S), mit einer Vorfeldsensorik (10) zur Ortung von Objekten (A) im Vorfeld des Fahrzeugs (S) und einem Steuergerät (14), das die Signale der Vorfeldsensorik auswertet, um die Gefahr einer bevorstehenden Kollision zu bewerten, und das bei akuter Kollisionsgefahr in die Längsführung des Fahrzeugs (S) eingreift, um die Kollision abzuwenden oder deren Folgen zu mildern, wobei eine ergänzende Sensorik (12, 22) zur Ortung von Objekten (F) im sonstigen Umfeld des Fahrzeugs (S) vorgesehen ist und das Steuergerät (14) dazu eingerichtet ist, anhand der Daten der ergänzenden Sensorik eine Längsführungsstrategie ($a_{opt}$) zu berechnen, die die Gesamtgefahr unter Berücksichtigung von Objekten (F) im sonstigen Umfeld minimiert,
   **dadurch gekennzeichnet, daß** die ergänzende Sensorik ein Rückraumradar (12) umfaßt und daß das Steuergerät (14) dazu eingerichtet ist, die Bewegung eines im Rückraum georteten Fahrzeugs (F) mathematisch zu modellieren, unter Zugrundelegung von empirisch ermittelten Durchschnittswerten für die Reaktionszeit des Fahrers des nachfolgenden Fahrzeugs (F) und das Verzögerungsvermögen dieses Fahrzeugs.

2. Vorrichtung nach Anspruch 1, **dadurch gekennzeichnet, daß** das Steuergerät (14) dazu eingerichtet ist, die Längsführungsstategie ($a_{opt}$) für das Fahrzeug (S) so zu berechnen, daß das Fahrzeug mit einer maximalen Verzögerungsrate verzögert wird, bei der ein Kontakt mit dem nachfolgenden Fahrzeug (F) gerade eben vermieden wird.

3. Vorrichtung nach Anspruch 2, **dadurch gekennzeichnet, daß** das Steuergerät (14) dazu eingerichtet ist, die Längsführungsstategie zu berechnen, sobald ein nachfolgendes Fahrzeug (F) geortet wird, und diese Strategie anzuwenden, sobald eine akute Gefahr einer Kollision mit einem im Vorfeld georteten Objekt (A) festgestellt wird.

4. Vorrichtung nach Anspruch 2 oder 3, **dadurch gekennzeichnet, daß** das Steuergerät (14) dazu eingerichtet ist, die Längsführungsstategie während des Eingriffs in die Längsführung des Fahrzeugs fortlaufend anhand der aktuellen dynamischen Daten des nachfolgenden Fahrzeugs (F) zu aktualisieren.

5. Vorrichtung nach einem der vorstehenden Ansprüche, **dadurch gekennzeichnet, daß** die ergänzende Sensorik Sensoren (22) zur Überwachung der seitlich neben dem Fahrzeug (S) gelegenen Zonen umfaßt.

**Claims**

1. Anticipatory safety device for motor vehicles (S), having a front-area sensor system (10) for locating objects (A) in the area in front of the vehicle (S) and a control device (14) which evaluates the signals from the front-area sensor system in order to assess the risk of an imminent collision and which intervenes in the longitudinal guidance of the vehicle (S) in the event of an acute risk of collision in order to avoid the collision or mitigate the effects of the latter, a supplementary sensor system (12, 22) being provided for the purpose of locating objects (F) in the other area surrounding the vehicle (S), and the control device (14) being set up to use the data from the supplementary sensor system to calculate a longitudinal guidance strategy ($a_{opt}$) which minimizes the overall risk, taking into account objects (F) in the other surrounding area,
   **characterized in that** the supplementary sensor system comprises a rear-area radar (12), and **in that** the control device (14) is set up to mathematically model the movement of a vehicle (F) located in the rear area, taking empirically determined average values for the response time of the driver of the following vehicle (F) and the deceleration capacity of this vehicle as a basis.

2. Device according to Claim 1, **characterized in that** the control device (14) is set up to calculate the longitudinal guidance strategy ($a_{opt}$) for the vehicle (S) in such a manner that the vehicle is decelerated at a maximum deceleration rate at which contact with the following vehicle (F) is just avoided.

3. Device according to Claim 2, **characterized in that** the control device (14) is set up to calculate the longitudinal guidance strategy as soon as a following vehicle (F) is located and to apply this strategy as soon as an acute risk of a collision with an object (A) located in the front area is determined.

4. Device according to Claim 2 or 3, **characterized in that** the control device (14) is set up to continuously update the longitudinal guidance strategy during intervention in the longitudinal guidance of the vehicle using the current dynamic data relating to the following vehicle (F).

**5.** Device according to one of the preceding claims, **characterized in that** the supplementary sensor system comprises sensors (22) for monitoring the zones to the side of the vehicle (S).

**Revendications**

**1.** Dispositif de sécurité prévisionnel pour véhicules automobiles (S), avec un système de détection de champ avant (10) permettant de localiser des objets (A) dans le champ avant du véhicule (S) et un appareil de commande (14) analysant les signaux du système de détection de champ avant pour analyser le risque de choc imminent et intervenant, en cas de risque de choc imminent, dans le guidage longitudinal du véhicule (S) pour éviter le choc ou amoindrir ses conséquences, un système de détection (12, 22) complémentaire étant prévu pour localiser des objets (F) dans un environnement autre du véhicule (S) et l'appareil de commande (14) étant conçu pour calculer une stratégie de guidage longitudinal ($a_{opt}$) à l'aide des données du système de détection complémentaire, ladite stratégie minimisant le risque global en prenant en compte les objets (F) se trouvant dans l'autre environnement ; **caractérisé en ce que** le système de détection complémentaire comprend un radar d'espace arrière (12) et que l'appareil de commande (14) est conçu pour modéliser de façon mathématique le mouvement d'un véhicule (F) localisé dans l'espace arrière, en établissant des valeurs moyennes déterminées empiriquement sur le temps de réaction du conducteur du véhicule (F) suivant et la capacité de ralentissement de ce véhicule.

**2.** Dispositif selon la revendication 1, **caractérisé en ce que** l'appareil de commande (14) est conçu pour calculer la stratégie de guidage longitudinal ($a_{opt}$) du véhicule (S) de telle sorte que le véhicule est ralenti à une vitesse de ralentissement maximale permettant d'éviter également un contact avec le véhicule (F) suivant.

**3.** Dispositif selon la revendication 2, **caractérisé en ce que** l'appareil de commande (14) est conçu pour calculer la stratégie de guidage longitudinal dès qu'un véhicule (F) suivant est localisé et pour appliquer cette stratégie dès détection d'un risque imminent de choc avec un objet (A) localisé dans le champ avant.

**4.** Dispositif selon la revendication 2 ou 3, **caractérisé en ce que** l'appareil de commande (14) est conçu pour actualiser en continu la stratégie de guidage longitudinal pendant l'intervention dans le guidage longitudinal du véhicule à l'aide des données dynamiques actuelles du véhicule (F) suivant.

**5.** Dispositif selon l'une quelconque des revendications précédentes, **caractérisé en ce que** le système de détection comprend des capteurs (22) de surveillance des zones situées latéralement en côté du véhicule (S).

EP 1 992 538 B1

Fig. 1

Fig. 2

**Fig. 3**

**Fig. 4**

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4218484 A1
- DE 10231557 A
- DE 19933782 A1
- WO 2006074210 A
- DE 10336986 A